# EUROPEAN PATENT APPLICATION

(11) **EP 2 384 680 A1**
(43) Date of publication of application: **09.11.2011**
(21) Application number: 11163181.8
(22) Date of filing: 20.04.2011
(51) Int. Cl.: A47L 9/28, A47L 9/19, A47L 11/40, G05B 19/409

(54) **Apparatus with wireless communication for managing industrial machinery, such as surfacers and vacuum cleaners**

(30) Priority: 26.04.2010 IT MI20100708
(71) Applicant: Valentini, Guido, 20122 Milano (IT)
(72) Inventor: Valentini, Guido, 20122 Milano (IT)
(74) Representative: Mittler, Enrico

(57) **Abstract**

An apparatus (1) for maintenance and management of industrial machines (19), comprising an internal mother board (2) with an internal chronometer (16), a terminal box with wireless communication technology (4) external to the machine (19) and equipped with display which shows functional parameters of the mother board (2) which are viewable by the machine's user (19), and a wireless communication device (5) installed on the machine (19) and connected to the mother board (2) so as to guarantee the recognition of the machine, and capable of transmitting and receiving wireless data with said wireless terminal box (4). (Fig. 1)

## Description

The present invention relates to an apparatus with wireless communication for managing industrial machinery, such as surfacers and vacuum cleaners.

Industrial vacuum cleaners are known which are managed by an internal mother board which dialogues by means of a serial communication port with a cabled terminal box, i.e, connected by means of external cable to the mother board of the machine. Said cabled terminal box is a work tool for operators in service centres and currently performs the following operations on the mother board: shows the software version, the number of machine operating hours which have elapsed between the last two consecutive maintenance operations, and the total number of operating hours of that machine immediately after the last maintenance.

By using the cabled terminal box, the operating hours may be zeroed so that the counting of the machine operating hours which have elapsed since the last maintenance operation, may start from zero again. This counting is performed by a chronometer within the mother board.

The cabled terminal box hardware consists of a screen, a serial transceiver and press operating buttons.

The main function of the cabled terminal box is the one of resetting the maintenance request indicated by the mother board after a defined number of operating hours, as said. In particular, the maintenance request is indicated by a coloured LED of the mother board that is visible outside the machine, which continuously remains on if maintenance is required. Maintenance is required for example when the brushes on the electric motor are at the end of their working life.

WO-2006/053028 describes a cleaning machine equipped with wireless transmission means adapted to communicate with remote transceivers.

It is the object of the present invention to make an apparatus for maintaining and managing industrial vacuum cleaners capable of even more taking advantage of the capacity of the current integrated mother boards in the machines, thus making the use and control thereof more effective.

In accordance with the invention, such an object is achieved with a maintenance and management apparatus of industrial machines as described in claim 1.

The features of the present invention will become apparent from the following detailed description of one of its non-limiting practical embodiment examples disclosed in the accompanying drawing which shows a diagrammatic view of the apparatus.

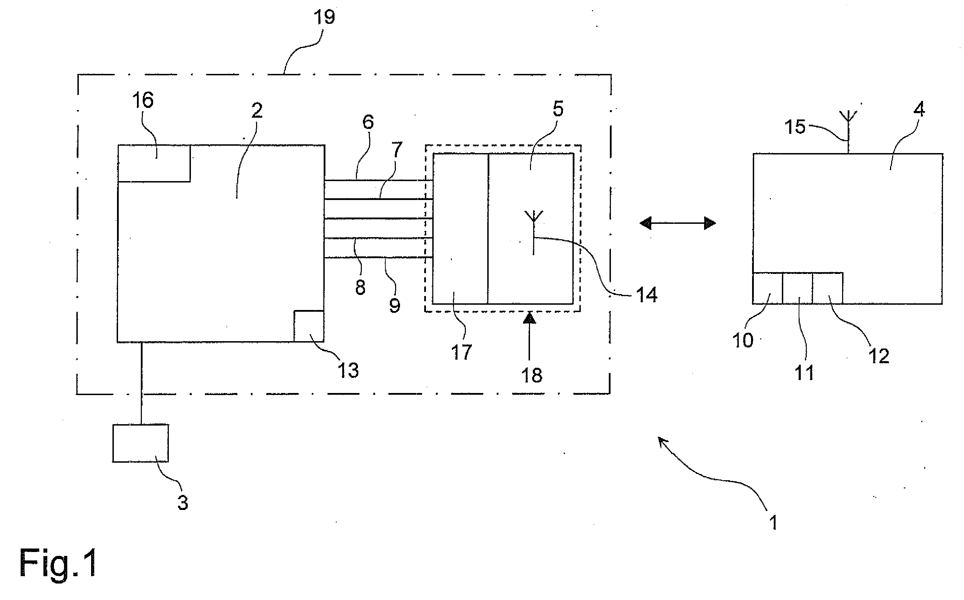

Accompanying figure 1 diagrammatically depicts the apparatus the object of the invention.

With reference to the accompanying figure, a wireless communication apparatus 1 is noted for industrial vacuum cleaner, diagrammatically represented with dotted-line section and indicated with reference numeral 19; machine 19 is of industrial type and operates with electric motor.

Apparatus 1 comprises:
- a mother board 2 within machine 19 and equipped with an internal chronometer 16 and a maintenance and filter cleaning signalling LED 13, said board 2 manages the functionalities of machine 19;
- a cabled terminal box 3 removably connected by means of a connector to the mother board 2 upon previous disassembly of machine 19; said box 3 is external to the machine and is of sole use to the service centre; box 3 is equipped with display showing certain parameters stored in the mother board 2;
- a terminal box with wireless communication technology 4 external to machine 19 used by the machine 19 user, equipped with display which shows further parameters of the mother board 2, which are viewable by the user;

- an internal wireless card 5, i.e. a thin data transceiver; the wireless card 5 is permanently installed in a port 18 of the vacuum cleaner and connected to the mother board 2 as interface between the mother board 2 and the external wireless terminal box 4;
- SCI serial communication interface and supply cables 6, 7, 8 and 9 between mother board 2 and wireless card 5.

Advantageously LED 13 turns on and always remains on when the apparatus detects that maintenance is required, for example typically changing the brushes on the electric motor. LED 13 turns on intermittently (flashes) when filter cleaning is required.

SCI cables 6, 7, 8 and 9 which connect the wireless card 5 and the mother board 2, respectively, are:
- a power lead 6 from the mother board 2 to the wireless card 5;
- a SCI TX serial asynchronous transmission line 7 of the mother board 2, which transmits data from the mother board 2 to the wireless card 5;
- a SCI RX serial asynchronous reception line 8 of the mother board 2, which transmits data from the wireless card 5 to the mother board 2; and
- a ground cable 9 for the reference voltage.

The wireless card 5 comprises:
- an RF transceiver with wireless communication chip;
- a mobile control unit (MCU) with SCI peripheral 17, used for communicating with the mother board 2 and the RF transceiver;
- an antenna 14.

The basic functionality of the wireless card 5 is the one of being an interface between the mother board 2 and the wireless terminal 4, with maximum communication distance of 50-100 meters on frequency band not assigned with licence. The wireless card 5 is permanently installed in the vacuum cleaner and is directly supplied by the mother board 2. Card 5 and wireless terminal 4 are coupled so as to recognize each other: thereby card 5 also performs the role of security key, the recognisability of the apparatus being ensured and hence also of the operator who is using it.

The cabled terminal box 3 performs the function of a cable communication device with the mother board 2, and is unvaried with respect to the cabled terminal board used in known art.

The functionalities of the cabled terminal box 3 are:
- resetting the maintenance indication by resetting LED 13 on the mother board 2 and the number of cleaning cycles; in particular, a zeroing is performed of the operating hours, so that the counting of the machine operating hours from the last maintenance operation may start from zero again. This counting is performed by a chronometer within the mother board. It is only possible to perform this resetting by means of the cabled terminal box 3 of the service centre, to ensure the machine functionality;
- showing the total number of operating hours of the electric motor; and
   showing the number af resettings performed by the maintenance centre.

The mother board 2 controls the chronometer to establish operating times.

The wireless box 4 being used by the user is differentiated from the cabled box 3 in that it is capable of providing the user with data which are not essential for maintenance but are useful in managing the machine especially in large workshops in which various operators work with various machines.

The mother board 2 stores many data which are not indispensable for the screen of the terminal box 3 due to the hardware restrictions coming from the prescribed use. For example, the cabled box 3 does not view the number of start-ups of the electric motor, and the number of cycles of the filter cleaning mechanism (activation number of the solenoids). In particular, the number of start-ups of the electric motor is useful because when a threshold is exceeded of the number of start-ups of the electric motor, there is a need to change the brushes that are worn of the electric motor.

The number of start-ups of the electric motor is a significant information for establishing the residual life of the brushes, as the number of cycles of the filter cleaning mechanism is a useful parameter for knowing the related residual life. Hence, it would be interesting to know these parameters. To do so, the hardware restrictions of the cabled terminal box must be overcome.

The wireless terminal box 4 comprises three switches 10, 11, 12:
- a first switch 10 with ON/OFF functions and recovery from a screen saver status;
- a second switch 11 with Start/Stop chronometer functions;
- a third switch 12 with reset chronometer functions.

Moreover, the wireless terminal 4 comprises an RF transceiver and an antenna 15.

The functionalities of the wireless terminal box 4 include a replication of certain functionalities of the cabled box 3, and other further ones which are:
- showing the operating hours in a day;
- showing the number of filter cleaning cycles;
- showing the number of electric motor start-ups;
- controlling the chronometer starting, blocking and resetting for the above-listed functionalities;
- showing the indication of the of the maintenance need of the motor, when LED 13 of the mother board 2 is on, and of the filter when LED 13 of the mother board 2 is flashing;
- showing the level of the charge of the batteries.

It may also show optional parameters as chosen by the final user.

Substantially, the wireless terminal box 4 allows the final user to take advantage of partial counting not indispensable for the machine maintenance but useful for an effective control of the operator's work.

In large workshops where various industrial vacuum cleaners are operating, it is possible to provide a single wireless box 4 for a plurality of machines 19 equipped with respective wireless cards 5. The workshop manager is capable of monitoring all the machines with a single tool, without wiring problems.

The wireless box 4 may also provide means for automatically calling the service centre in case of notifications, thus limiting the intervention times.

Advantageously the energy supply of the apparatus is +5V. The batteries may be two AA batteries and the display may be equipped with a screen saver to save energy.

The aforesaid architecture substantially allows the architecture of the preceding apparatus to be kept unvaried, while using the new functionalities of the wireless terminal 4.

In particular, the cabled terminal box 3 does not require modifications. The mother board 2 should keep the same SCI interface, but may require modifications to the MCU flash memory from actual 8k to 16k. The preceding 5V energy supply could also have to be increased, since the wireless card 5 is supplied by the energy of the mother board 2, as already mentioned.

It is worth noting that the communication between the wireless terminal box 4 and the wireless card 5 mounted on the vacuum cleaner is reciprocally coded thus making the communication reciprocally bound, but only for the vacuum cleaner user, this to prevent incorrect communication in case of presence of several vacuum cleaners in a same radius of action. However, the service centre may unbind such a communication and for example induce a terminal box 4 which replaces another failing one to communicate with the wireless card 5 of the vacuum cleaner being repaired, as long as the wireless card 5 is of known type.

With the afore-described wireless communication, the surfacers equipped with dust suction conduits connected to a vacuum cleaner equipped with this control may ensure optimal levels of suction efficiency while controlling more easily the efficiency of the main filters.

This need is particularly felt today also due to the harsher health controls in work environments such as body shops, carpenter's shops, shipyards, where the exposure of the operator must necessarily be without risks to the health.

The use of the aforementioned wireless system also allows the operator to control the exposure to both noise pollution and vibrations, as provided by current legislation.

## Claims

1. An industrial apparatus (1) comprising an industrial machine (19), in particular a surfacer and/or an industrial vacuum cleaner, equipped with an internal mother board (2) with internal chronometer (16) and with an internal wireless communication device (5) installed on the machine (19) and connected to said mother board (2) so as to supply recognition data of the machine status (19), said apparatus (1) also comprising a cabled terminal box (3) connectable by means of wires to the mother board (2) and external to machine (19), equipped with display for showing certain parameters stored in the mother board (2) and with means adapted to reset certain critical operating parameters, and a terminal box (4) with wireless communication technology arranged externally to the machine (19) and capable of communicating with said internal wireless device (5), said external wireless device (4) being equipped with display for showing operating parameters of the mother board (2) viewable by the machine (19) user and command means (10-12) adapted to reset non-critical operating parameters.

2. An apparatus (1) according to claim 1, **characterized in that** one single external wireless box (4) provides means adapted to manage a plurality of information coming from a plurality of internal wireless devices (5) of various machines (19).

3. An apparatus according to any one of the preceding claims, **characterized in that** said external wireless box (4) comprises means for:
- showing the operating hours in a day;
- showing the number of filter cleaning cycles;
- showing the number of electric motor start-ups;
- controlling the chronometer starting, blocking and resetting for the above-listed functionalities;
- showing the level of the charge of the batteries.

4. A maintenance and management method of industrial machines (19), **characterized in that** it provides the definition of critical and non-critical operating parameters, the resetting of the non-critical parameters by means of an external wireless box (4), and the resetting of the critical parameters by means of a cabled terminal box (3) which is external but connectable by means of wires to the mother board (2) of the machine (19).
